# EUROPEAN PATENT SPECIFICATION

(11) **EP 1 669 879 B1**
(45) Date of publication and mention of the grant of the patent: **10.12.2008**
(21) Application number: 05252808.0
(22) Date of filing: 06.05.2005
(51) Int. Cl.: G06F 13/16, G06F 13/14, H04J 3/06, H04L 7/00, H04L 12/26, G06F 17/50

(54) **Method, system and apparatus for link latency management**
Verfahren, System und Vorrichtung für die Verwaltung der Verbindungsverzögerung
Méthode, système et dispositif pour la gestion du temps d'attente de liaison

(30) Priority: 13.12.2004 US 11301
(43) Date of publication of application: 14.06.2006
(73) Proprietor: Intel Corporation, Santa Clara, CA 95052 (US)
(72) Inventor: Cherukuri, Naveen, San Jose California 95134 (US); Dabral, Sanjay, Palo Alto California 95303 (US); Dunning, David S., Portland Oregon 97229 (US); Schoenborn, Theodore Z., Portland Oregon 97211 (US); Frodsham, Tim, Portland Oregon 97229 (US); Tripp, Michael J., Forest Grove Oregon 97116 (US); O'Brien, David J., Portland Oregon 97229 (US); Muraleedhara, Navada Herur, Santa Clara California 95051 (US)
(74) Representative: Harrison Goddard Foote

(56) References cited:
- WO-A-01/42936
- US-A1- 2002 064 185
- US-A1- 2003 014 680
- US-A1- 2003 202 542
- US-B1- 6 212 171
- US-B1- 6 289 406

## Description

### BACKGROUND OF THE INVENTION

### Field of the Invention

The present invention relates to serial type interfaces that require link latency management for deterministic operation.

### Description of the Related Art

Current systems based on the Front Side Bus (FSB) utilize a common clock based interface. Thus, determinism and latency are known quantities. In contrast, serial type interfaces have a link latency that is no longer constant. Hence, determinism and repeatability require diligent design and test support to insure accurate deterministic operation.

US 6,212,171 discloses determination of a round-trip latency delay in a serial bus network using a single measuring node that determines latency values for multiple leaf nodes.

US 2002/064185 discloses measurement of round-trip latency between nodes in an IEEE 1394 serial bus in which a transmitting node waits for a Self-ID packet to be received.

US 203/014680 is directed to synchronizing data transmissions between a data source and a control device. A receiving node determines a propagation delay and provides a corresponding delay time.

US 6,289,406 is directed to determining a latency value associated with retry behavior in a system having a bus bridge.

WO 01/42936 is directed to aligning latency between paths in a system.

US 2003/202542 is directed to equalizing transmission delay between seismic sensor stations and a remote central office using a loop back arrangement at each node to equalize the delay.

According to a first aspect of the invention, there is provided a system arranged to calculate latency corresponding to a round trip delay over a serial interface between a master agent and a slave agent as claimed in claim 1.

According to a second aspect of the invention, there is provided a method as claimed in claim 3.

Further embodiments of the invention are included in the dependent claims.

### BRIEF DESCRIPTION OF THE SEVERAL VIEWS OF THE DRAWINGS

Subject matter is particularly pointed out and distinctly claimed in the concluding portion of the specification. The claimed subject matter, however, both as to organization and method of operation, together with objects, features, and advantages thereof, may best be understood by reference to the following detailed description when read with the accompanying drawings in which:
Figure 1 is a protocol architecture as utilized by one embodiment.
Figure 2 is a block diagram of an apparatus for a physical interconnect utilized in accordance with the claimed subject matter.
Figure 3 illustrates a timing diagram for a method for link latency management as utilized by an embodiment.
Figure 4 is multiple embodiments of a system as utilized by multiple embodiments.

### DETAILED DESCRIPTION OF THE INVENTION

A method, apparatus, and system for link latency management for a high speed point to point network (pTp) is described in the following description, for purposes of explanation, numerous details are set forth in order to provide a thorough understanding of the present invention. However, it will be apparent to one skilled in the art that these specific details are not required in order to practice the present invention.

An area of current technological development relates to reliability, availability, and serviceability (RAS). As previously described, current systems are based on the Front Side Bus (FSB) utilize a common clock based interface. Thus, determinism and latency are known quantities. In contrast, serial type interfaces have a link latency that is no longer constant.

The claimed subject matter facilitates calculating latency of the serial interface by tracking a round trip delay of a header that contains latency information. Therefore, the claimed subject matter facilitates testers, logic analyzers, or test devices to accurately measure link latency for a point-to-point architecture utilizing a serial interface. Consequently, PSMI traces and RTL traces are generated.

In one embodiment, the pTp architecture is defined by Intel's Common System Interface (CSI) and supports a layered protocol scheme, which is discussed in further detail in the next paragraph. Figure one illustrates one example of a cache coherence protocol's abstract view of the underlying network. One example of a cache coherence protocol is described in pending application US 2006/0006900.

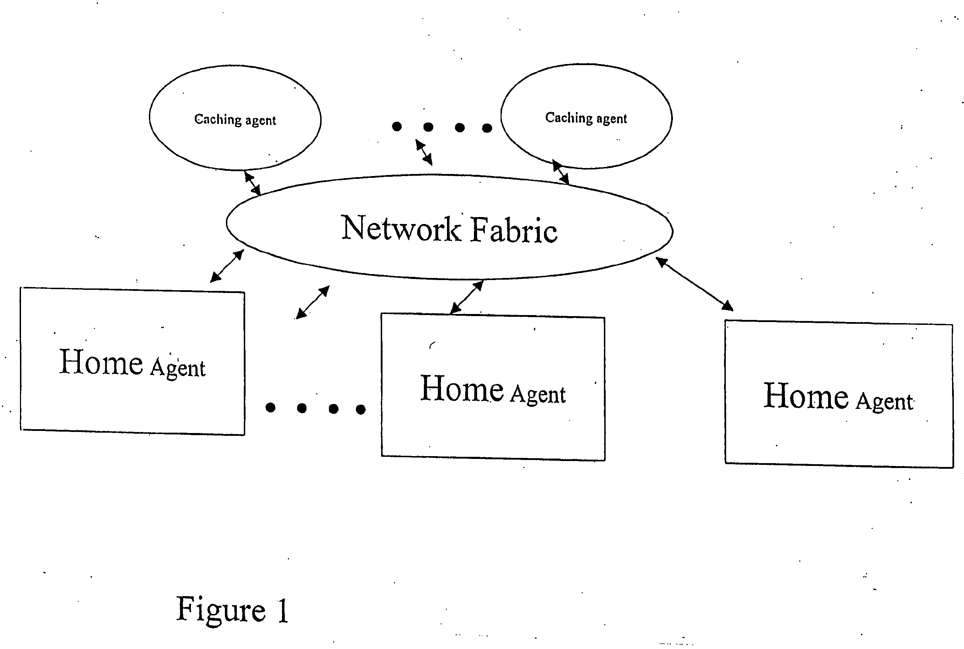

Figure 1 is a protocol architecture as utilized by one embodiment. The architecture depicts a plurality of caching agents and home agents coupled to a network fabric. For example, the network fabric adheres to a layered protocol scheme and may comprise either or all of: a link layer, a physical layer, a protocol layer, a routing layer, a transport layer. The fabric facilitates transporting messages from one protocol (home or caching agent) to another protocol for a point-to-point network. In one aspect, the figure depicts a cache coherence protocol's abstract view of the underlying network.

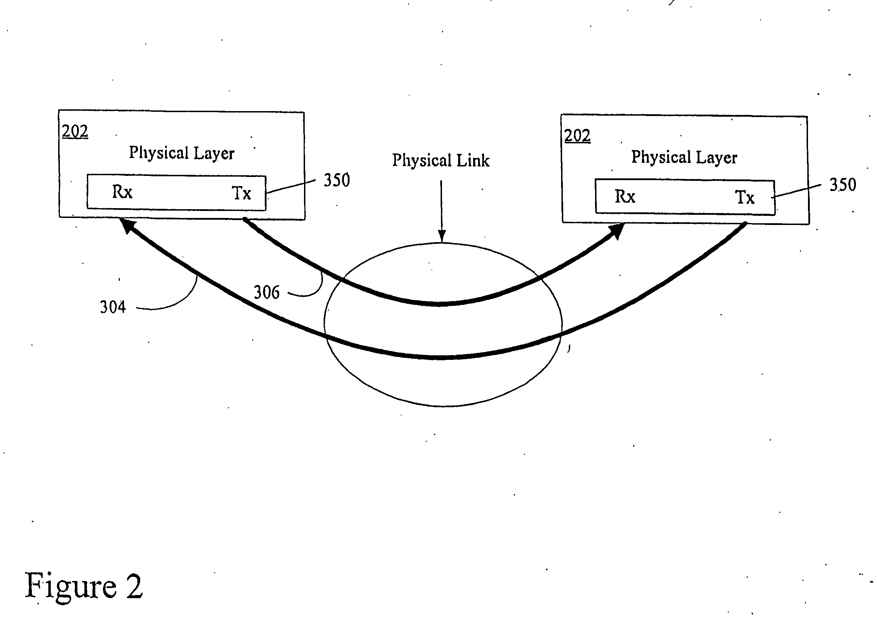

FIG. 2 is a block diagram of an apparatus for a physical interconnect utilized in accordance with the claimed subject matter. In one aspect, the apparatus depicts a physical layer for a cache-coherent, link-based interconnect scheme for a processor, chipset, and/or IO bridge components. For example, the physical interconnect may be performed by each physical layer of an integrated device. Specifically, the physical layer provides communication between two ports over a physical interconnect comprising two uni-directional links. Specifically, one uni-directional link 304 from a first transmit port 350 of a first integrated device 202 to a first receiver port 350 of a second integrated device 202. Likewise, a second uni-directional link 306 from a first transmit port 350 of the second integrated device to a first receiver port 350 of the first integrated device. However, the claimed subject matter is not limited to two uni-directional links. One skilled in the art appreciates the claimed subject matter supports any know signaling techniques, such as, bi-directional links, etc.

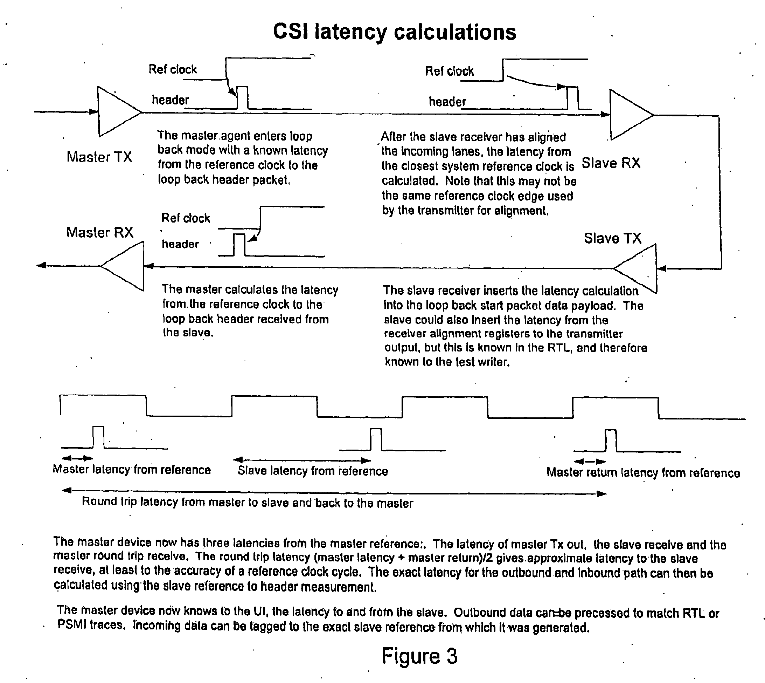

Figure 3 illustrates a timing diagram for a method for link latency management as utilized by an embodiment. The timing diagram depicts a master agent (depicted as master TX) to enter a loop back mode with a known latency from a reference clock (depicted as Ref clock) to a header packet (depicted as header). For example, the known latency is the difference between the two signals depicted via an arrow. Subsequently, the slave receiver (depicted as slave RX) aligns a plurality of incoming lanes from the transmitter. Consequently, the latency from a system reference clock is calculated. In one embodiment, the system reference clock chosen is the closest system reference clock to the slave receiver and may not be the same reference clock edge used by the master transmitter for alignment. The slave receiver inserts a latency calculation into a loop back start packet data payload. In one embodiment, the slave could also insert a latency from the receiver alignment registers to the transmitter output. Subsequently, the master calculates the latency from the reference clock to the header received from the slave transmitter.

Hence, the master device now has three latencies from the master reference:. The latency of master Tx out, the slave receive, and the master round trip receive. The round trip latency (master latency + master return)/2 gives approximate latency to the slave receive, at least to the accuracy of a reference clock cycle. The exact latency for the outbound and inbound path can then be calculated using the slave reference to header measurement. Therefore, the master device now knows the latency to and from the slave. Furthermore, outbound data can be processed to match RTL or PSMI traces. Likewise, incoming data can be tagged to the exact slave reference from which it was generated.

On a final note, the claimed subject matter facilitates link latency management by tracking the cycle in which the packet header was sent from the master transmitter, received by the slave and retransmitted back to the master, the round trip latency can be calculated along with the inbound and outbound latency.

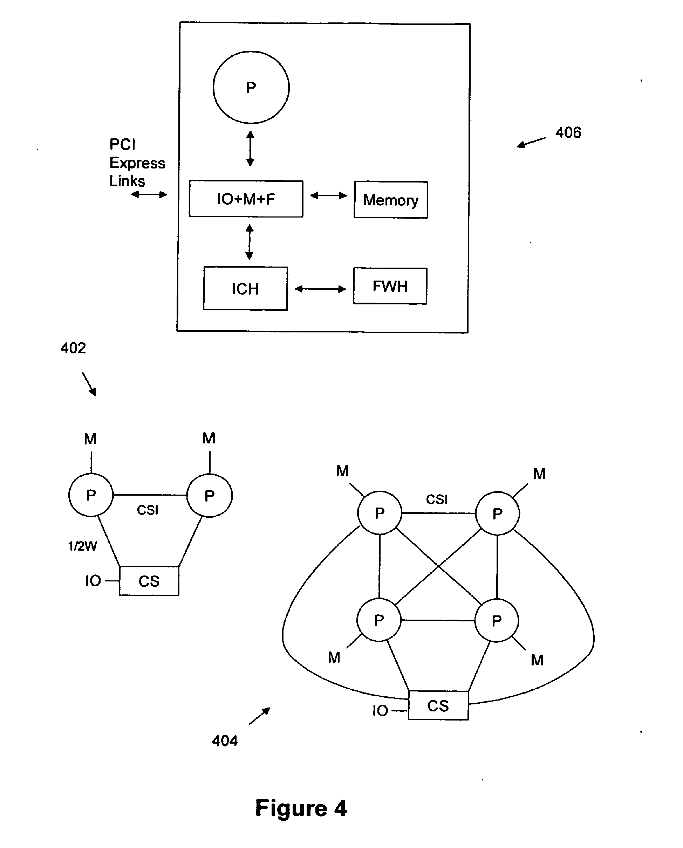

Figure 4 depicts a point-to-point system with one or more processors. The claimed subject matter comprises several embodiments, one with one processor 406, one with two processors (P) 402 and one with four processors (P) 404. In embodiments 402 and 404, each processor is coupled to a memory (M) and is connected to each processor via a network fabric may comprise either or all of: a link layer, a protocol layer, a routing layer, a transport layer, and a physical layer. The fabric facilitates transporting messages from one protocol (home or caching agent) to another protocol for a point-to-point network. As previously described, the system of a network fabric supports any of the embodiments depicted in connection with Figures 1-3.

For embodiment 406, the uni-processor P is coupled to graphics and memory control, depicted as IO+M+F, via a network fabric link that corresponds to a layered protocol scheme. The graphics and memory control is coupled to memory and is capable of receiving and transmitting via PCI Express Links. Likewise, the graphics and memory control is coupled to the ICH. Furthermore, the ICH is coupled to a firmware hub (FWH) via a LPC bus. Also, for a different uni-processor embodiment, the processor would have external network fabric links. The processor may have multiple cores with split or shared caches with each core coupled to a Xbar router and a non-routing global links interface. Thus, the external network fabric links are coupled to the Xbar router and a non-routing global links interface.

Although the claimed subject matter has been described with reference to specific embodiments, this description is not meant to be construed in a limiting sense. Various modifications of the disclosed embodiment, as well as alternative embodiments of the claimed subject matter, will become apparent to persons skilled in the art upon reference to the description of the claimed subject matter. It is contemplated, therefore, that such modifications can be made without departing from the scope of the claimed subject matter as defined in the appended claims.

## Claims

1. A system arranged to calculate
a transmitter (350) in the master agent arranged to transmit a loopback header packet from the master agent, coupled to the link of the point-to-point architecture and to enter a loopback mode of operation with a known latency from a transition of a reference clock signal to a beginning of the loopback header packet;
a receiver (350) in the slave agent, coupled to the link of the point-to-point architecture, to align packets received via a plurality of incoming lanes from the master agent and to calculate a latency based on transitions of a system clock signal, wherein the slave agent is arranged to insert an indication of the calculated latency in a loopback header packet to be transmitted to the master agent; and
a master receiver in the master agent arranged to calculate a latency from a reference clock to the loopback header packet received from the slave agent.

2. The system of claim 1, wherein the system clock signal for the slave agent used to calculate the latency is a system reference clock signal that is the closest to the slave agent.

3. A method of calculating latency corresponding to a round trip delay over a serial interface between a master agent (202) and a slave agent (202) by tracking a delay of a packet transmitted over a link (304, 306) of a point- to-point architecture **characterised by**:
causing a master agent to center a loopback mode with a known latency between a transition of a reference clock signal and a beginning of a loopback header packet;
transmitting the loopback header packet from a master device (202) to a slave device (202) via a link (304, 306) of a point-to-point connection architecture;
using a closest system clock at the slave device to determine a latency value;
inserting the determined latency value into a loop back start packet payload;
transmitting the loop back start packet from the slave device to the master device via a link of the point-to-point connection architecture;
determining a plurality of latency values with the master device in response to receiving the loop back start packet.

4. The method of claim 3, wherein the plurality of latency values comprises a master latency as compared to a reference clock signal, a slave latency as compared to the reference clock signal, and a master return latency.

5. The method of claim 3, wherein the plurality of latency values comprises a master latency as compared to a reference clock signal, a slave latency as compared to a slave system clock signal, and a master return latency.

## Patentansprüche

1. System, das angeordnet ist zur Berechnung einer Latenz, die einer Umlaufverzögerung über eine serielle Schnittstelle zwischen einem Master-Agenten (202) und einem Slave-Agenten (202) entspricht, indem eine Verzögerung eines über eine Verbindungsleitung (304, 306) einer Punkt-zu-Punkt-Architektur übermittelten Pakets verfolgt wird, **gekennzeichnet durch**:
einen Sender (350) in dem Master-Agenten, der so angeordnet ist, dass er ein Loopback-Header-Paket von dem Master-Agenten übermittelt, gekoppelt mit der Verbindungsleitung der Punkt-zu-Punkt-Architektur, und in einen Loopback-Betriebsmodus mit einer bekannten Latenz von einem Übergang eines Referenztaktsignals zum Anfang des Loopback-Header-Pakets einzutreten;
einen Empfänger (350) in dem Slave-Agenten, der mit der Verbindungsleitung der Punkt-zu-Punkt-Architektur gekoppelt ist, um Pakete auszurichten, die über eine Mehrzahl eingehender Spuren von dem Master-Agenten empfangen werden, und um eine Latenz auf der Basis von Übergängen eines Systemtaktsignals zu berechnen, wobei der Slave-Agent so angeordnet ist, dass er eine Anzeige der berechneten Latenz in ein Loopback-Header-Paket einfügt, das zu dem Master-Agenten übermittelt wird; und
einen Master-Empfänger in dem Master-Agenten, der so angeordnet ist, dass er eine Latenz von einem Referenztakt zu dem Loopback-Header-Paket berechnet, das von dem Slave-Agenten empfangen worden ist.

2. System nach Anspruch 1, wobei es sich bei dem Systemtaktsignal für den Slave-Agenten, das zur Berechnung der Latenz verwendet wird, um ein Systemreferenztaktsignal handelt, das sich am dichtesten an dem Slave-Agenten befindet.

3. Ausführungsbeispiel zur Berechnung einer Latenz, die einer Umlaufverzögerung über eine serielle Schnittstelle zwischen einem Master-Agenten (202) und einem Slave-Agenten (202) entspricht, indem eine Verzögerung eines über eine Verbindungsleitung (304, 306) einer Punkt-zu-Punkt-Architektur übermittelten Pakets verfolgt wird, **gekennzeichnet durch**:
das Bewirken, dass ein Master-Agent in einen Loopback-Modus mit einer bekannten Latenz zwischen einem Übergang eines Referenztaktsignals und einem Anfang eines Loopback-Header-Pakets eintritt;
das Übermitteln des Loopback-Header-Pakets von einer Master-Vorrichtung (202) zu einer Slave-Vorrichtung (202) über eine Verbindungsleitung (304, 306) einer Punkt-zu-Punkt-Verbindungsarchitektur;
das Verwenden eines nächsten Systemtakts an der Slave-Vorrichtung, um einen Latenzwert zu bestimmen;
das Einfügen des bestimmten Latenzwertes in eine Loopback-Anfangspaket-Nutzlast;
das Übermitteln des Loopback-Anfangspakets von der Slave-Vorrichtung zu der Master-Vorrichtung über eine Verbindungsleitung der Punkt-zu-Punkt-Verbindungsarchitektur;
das Bestimmen einer Mehrzahl von Latenzwerten mit der Master-Vorrichtung als Reaktion auf den Empfang des Loopback-Anfangspakets.

4. Verfahren nach Anspruch 3, wobei die Mehrzahl von Latenzwerten eine Master-Latenz im Vergleich zu einem Referenztaktsignal, eine Slave-Latenz im Vergleich zu dem Referenztaktsignal und eine Master-Rückführungslatenz umfasst.

5. Verfahren nach Anspruch 3, wobei die Mehrzahl von Latenzwerten eine Master-Latenz im Vergleich zu einem Referenztaktsignal, eine Slave-Latenz im Vergleich zu einem Slave-Systemtaktsignal und eine Master-Rückführungslatenz umfasst.

## Revendications

1. Système agencé pour calculer une latence correspondant à un délai aller-retour sur une interface série entre un agent maître (202) et un agent esclave (202) en suivant le délai d'un paquet transmis sur une liaison (304, 306) d'une architecture point à point **caractérisé par** :
un émetteur (350) dans l'agent maître agencé pour transmettre un paquet d'en-têtes en boucle de l'agent maître, couplé au lien de l'architecture point à point et pour passer au mode de fonctionnement en boucle avec une latence connue de la transition d'un signal d'horloge de référence à un début du paquet d'en-têtes en boucle ;
un récepteur (350) dans l'agent esclave, couplé au lien à l'architecture point à point, pour aligner les paquets reçus via une pluralité de lignes entrantes depuis l'agent maître et pour calculer une latence basée sur des transitions d'un signal d'horloge système, dans lequel l'agent esclave est agencé pour insérer une indication de la latence calculée dans un paquet d'en-têtes en boucle à transmettre à l'agent maître ; et
un récepteur maître dans l'agent maître agencé pour calculer une latence à partir d'une horloge de référence vers un paquet d'en-têtes en boucle reçu de l'agent esclave.

2. Système selon la revendication 1, dans lequel le signal d'horloge de référence pour l'agent esclave utilisé pour calculer la latence est un signal d'horloge de référence système qui est le plus proche de l'agent esclave.

3. Procédé de calcul d'une latence correspondant à un délai aller-retour sur une interface série entre un agent maître (202) et un agent esclave (202) en suivant le délai d'un paquet transmis sur une liaison (304, 306) d'une architecture point à point **caractérisé par** les étapes consistant à :
amener un agent maître à passer en mode de fonctionnement en boucle avec une latence connue entre une transition d'un signal d'horloge de référence et le début d'un paquet d'en-têtes en boucle ;
transmettre le paquet d'en-têtes en boucle d'un dispositif maître (202) à un dispositif esclave (202) via une liaison (304, 306) d'une architecture de connexion point à point ;
utiliser une horloge système la plus proche au niveau du dispositif esclave pour déterminer une valeur de latence ;
insérer la valeur de latence déterminée dans une charge utile de paquet de démarrage en boucle ;
transmettre le paquet de démarrage en boucle du dispositif esclave au dispositif maître via une liaison de l'architecture de connexion point à point ;
déterminer une pluralité de valeurs de latence avec le dispositif maître en réponse à la réception du paquet de démarrage en boucle.

4. Procédé selon la revendication 3, dans lequel la pluralité de valeurs de latence comprend une latence maîtresse par rapport à un signal d'horloge de référence, une latence esclave par rapport au signal d'horloge de référence, et une latence de retour maîtresse.

5. Procédé selon la revendication 3, dans lequel la pluralité de valeurs de latence comprend une latence maîtresse par rapport à un signal d'horloge de référence, une latence esclave par rapport au signal d'horloge système de référence, et une latence de retour maîtresse.
